# EUROPÄISCHE PATENTSCHRIFT

(11) **EP 0 641 616 B1**
(45) Veröffentlichungstag und Bekanntmachung des Hinweises auf die Patenterteilung: **08.10.1997**
(21) Anmeldenummer: 94112086.7
(22) Anmeldetag: 03.08.1994
(51) Int. Cl.: B23B 51/00

(54) **Bohrvorrichtung zur Herstellung von Bohrlöchern mit Hinterschneidung**
Drilling device for making undercuttings in holes
Dispositif de forage pour l'usinage de trous chambrés

(30) Priorität: 06.09.1993 DE 4330058
(43) Veröffentlichungstag der Anmeldung: 08.03.1995
(73) Patentinhaber: fischerwerke Artur Fischer GmbH & Co. KG, D-72178 Waldachtal (DE)
(72) Erfinder: Erath, Herbert, D-72178 Waldachtal (DE)

(56) Entgegenhaltungen:
- EP-A- 0 087 085
- CH-A- 359 005
- DE-C- 662 661
- GB-A- 518 688
- US-A- 1 459 366
- US-A- 1 536 208
- US-A- 2 818 753

## Beschreibung

Die Erfindung betrifft eine Bohrvorrichtung zur Herstellung von Bohrlöchern mit Hinterschneidung gemäß Oberbegriff des Anspruchs 1.

Zur Herstellung von Bohrlöchern mit Hinterschneidung sind Bohrvorrichtungen bekannt, die zum Ausreiben der Hinterschneidung ein Verschwenken des gesamten Bohrwerkzeugs vorsehen. Durch Ausschwenken des Bohrwerkzeuges bei gleichzeitiger Rührbewegung wird von den am Bohrwerkzeug angeordneten Seitenschneiden im Bereich des Bohrlochgrundes eine Hinterschneidung ausgerieben, in die ein Spreizdübel mit aufspreizbarer Spreizhülse formschlüssig einsetzbar ist.

Derartige Bohrlöcher mit Hinterschneidung lassen sich auch in Fassadenplatten oder dergleichen einbringen, jedoch müssen dort die Hinterschneidungen sehr exakt ausgeführt werden, damit beim Einsetzen und Aufspreizen eines Spreizdübels kein zu hoher Spreizdruck entsteht. Ein zu hoher Spreizdruck kann nämlich dazu führen, daß ein Teil der Fassadenplatte wegplatzt. Um eine exakte Hinterschneidung herzustellen, sind diese Bohrvorrichtungen derart ausgestaltet, daß ein automatisches, maschinengesteuertes Ausswenken ermöglicht wird. Ferner werden Bohrwerkzeuge verwendet, die einen mit Diamantsplitter bestückten Bohrkopf aufweisen. Beim Eintauchen des mit der Antriebsachse der Bohrmaschine fluchtend eingespannten Bohrwerkzeuges in die Fassadenplatte kommt die gesamte Stirnseite des kegelstumpfförmig ausgebildeten Bohrkopfes in Eingriff.

Aus der GB-A 518 688 ist eine Vorrichtung zur Herstellung von Bohrlöchern mit Hinterschneidung gemäß dem Oberbegriff des Patentanspruchs 1 bekannt Diese Vorrichtung weist eine als Hohlwelle ausgebildete Bohrspindel auf, in der ein Bohrerhalter einliegt, der zur seitlichen Auslenkung schwenkbar in der Hohlwelle gelagert ist. Die Verschwenkung erfolgt mittels einer Schiebehülse, die auf der Bohrspindel axial verschiebbar ist und mit der sich ein die Hohlwelle quer durchgreifender Bolzen als Auslenkelement mitbewegt. Über eine Schrägführung des Bohrerhalters wird dieser verschwenkt und dadurch ein in ihn eingespannter Bohrer seitlich ausgelenkt.

Diese Bohrspindel wird in eine Bohrmaschine eingespannt, rotierend angetrieben und zur Erzeugung eines Vorschubs in axialer Richtung auf ein zu bohrendes Werkstück zubewegt. Der Bohrer dringt zunächst ohne Auslenkung in das Werkstück ein und erzeugt ein zylindrisches Bohrloch, bis ein Tiefenanschlag auf dem Werkstück aufsitzt. Bei weiterem Vorschub dringt der Bohrer tiefer in das Werkstück ein. Zugleich wird die Schiebemuffe, die mit dem Tiefenanschlag in Verbindung steht, gegen die Kraft eines Federelementes auf der Bohrspindel verschoben und dadurch der Bohrerhalter mit dem Bohrer seitlich ausgelenkt. Der Bohrer vollführt eine Taumelbewegung, d.h. er bewegt sich auf einer Kegelmantelfläche, wobei sich die seitliche Auslenkung, d.h. der Kegelwinkel der Taumelbewegung, mit zunehmender Bohrtiefe vergrößert. Dadurch wird eine kegelige Hinterschneidung mit spitzem Kegelwinkel hergestellt.

Eine solche Hinterschneidung bietet einem eingesetzten Spreizdübel mit aufpreizbarer Spreizhülse nur einen schwachen Formschluß. Ein Großteil einer Verankerungskraft des Spreizdübels wird durch Kraftschluß übertragen. Zur Erzielung eines guten Formschlußes muß die Hinterschneidung tief ausgebildet werden. Bei einer Fassadenplatte besteht jedoch das Problem, daß die maximale Bohrlochtiefe durch die Dicke der Fassadenplatte begrenzt ist.

Der Erfindung liegt daher die Aufgabe zugrunde, ein Bohrvorrichtung zur Herstellung von Bohrlöchern mit Hinterschneidung zu schaffen, die bei kleiner Bohrlochtiefe eine großflächige Hinterschneidung zur formschlüssigen Übertragung hoher Verankerungskräfte aufweist.

Die Lösung dieser Aufgabe erhält man durch die im Anspruch 1 angegebenen Merkmale. Der Bohrer der erfindungsgemäßen Bohrvorrichtung weist seitlich überstehende Schneiden an seinem Bohrkopf zum Ausreiben der Hinterschneidung auf. Nachdem der zylindrische Teil des Bohrlochs hergestellt ist, also nach Erreichen einer vorgegebenen Bohrlochtiefe, wird der Bohrer zur Herstellung der Hinterschneidung ausschließlich seitlich ausgelenkt, es erfolgt kein Vorschub in axialer Richtung während des Ausreibens der Hinterschneidung. Die erfindungsgemäße Bohrvorrichtung weist eine Verriegelungseinrichtung auf, die die Bohrspindel unmittelbar oder mittelbar über einen sie tragenden Halteblock mit einer Hubeinrichtung der Bohrvorrichtung verriegelt und die nach Fertigstellung der Hinterschneidng von einem auf der Werkstückoberfläche aufsitzenden Tiefenanschlag gelöst wird. Zum Bohren des zylindrischen Bohrlochs wird die Bohrspindel zusammen mit dem in ihr einliegenden Bohrerhalter in axialer Richtung vorgeschoben. Die Schiebemuffe bewegt sich mit der Bohrspindel mit, es findet keine Relativbewegung zwischen Schiebemuffe und Bohrspindel statt und der Bohrer wird nicht seitlich ausgelenkt. Sobald der Tiefenanschlag auf dem Werkstück aufsitzt, also bei Erreichen einer vorgegebenen Bohrlochtiefe, hält der Tiefenanschlag die Bohrspindel zurück, d.h. diese bewegt sich nicht mehr in axialer Richtung weiter, es findet keine Vorschubbewegung mehr statt und das Bohrloch wird nicht mehr vertieft. Die Hubeinrichtung wird weiter bewegt und verschiebt die mit ihr verriegelte Schiebemuffe in axialer Richtung auf der vom Tiefenanschlag gehaltenen Bohrspindel. Dadurch wird der in der Bohrspindel einliegende Bohrerhalter seitlich verschwenkt oder seitlich parallel verschoben, der Bohrer wird seitlich ausgelenkt und die Hinterschneidung ausgerieben. Bei Erreichen einer vorgegebenen seitlichen Auslenkung löst der die Bohrspindel rückhaltende Tiefenanschlag die Verriegelungseinrichtung, die Schiebemuffe kommt von der Hubeinrichtung frei und wird federbetätigt in ihre Ausgangsstellung auf der Bohrspindel zurückverschoben und die Auslenkung des Bohrers aufgehoben. Anschließend läßt sich die Bohrspindel mit der Hubeinrichtung axial aus dem Bohrloch herausziehen.

Die erfindungsgemäße Bohrvorrichtung hat den Vorteil, daß ihr Bohrer zur Herstellung der Hinterschneidung ausschließlich seitlich ausgelenkt wird, sodaß eine Hinterschneidung mit radialer oder nahezu radialer Hinterschnittfläche herstellbar ist. Diese gewährt einen guten Formschluß für einen eingesetzten Spreizanker bei minimaler Tiefe der Hinterschneidung in axialer Richtung. Dadurch läßt sich eine hohe Verankerungskraft eines Spreizankers auch in einer dünnen Fassadenplatte erzielen.

Der Bohrerhalter liegt in einer als Hohlspindel ausgebildeten Bohrspindel zusammen mit einem Auslenkelement ein, welches an einer Steuerfläche des Bohrerhalters angreift. Außerhalb der Bohrspindel ist eine Schiebemuffe vorgesehen, die die Bohrspindel umfaßt. Der Schwenkmechanismus liegt zum überwiegenden Teil geschützt in der Bohrspindel, so daß sich in Verbindung mit der Schiebemuffe ein sehr kompakter Auslenkmechanismus ergibt.

Der Bohrerhalter kann um eine quer in der Bohrspindel angeordnete Schwenkachse schwenkbar sein oder so in der Bohrspindel gelagert sein, daß er bezüglich der Mittelachse der Bohrspindel parallel verschiebbar ist. In beiden Fällen kann das Verschwenken durch eine Axialverschiebung der Schiebemuffe erfolgen. Das Verschwenken um eine Schwenkachse kann mittels eines Kulissensteins erfolgen, während die Parallelverschiebung mittels eines axial in der Bohrspindel verschiebbaren Schiebers erfolgen kann.

Besonders vorteilhaft ist es, daß die Schiebemuffe über einen Hebel axial verschiebbar ist und sich über ein Federelement gegenüber der Bohrspindel abstützt, wobei an der Bohrspindel ein Tiefenanschlag angeordnet ist. Über den Hebel kann somit die Schiebemuffe und gleichermaßen die Bohrspindel zur Herstellung eines Bohrlochs abgesenkt werden, bis der Tiefenanschlag wirksam wird. Dann beginnt eine Relativbewegung der Schiebemuffe gegenüber der Bohrspindel, wobei die Auslenkung des Bohrerhalters zwangsweise erfolgt und die Hinterschneidung bei rotierendem Bohrer hergestellt wird. Das Auslenken des Bohrers erfordert von der Bedienperson keine zusätzliche Einstellarbeiten, sondern erfolgt durch Betätigung des Handhebels, mit dem die Hubbewegung des Bohrers zur Herstellung des zylindrischen Teils des Bohrlochs ausgeführt wird.

Damit sichergestellt wird, daß die Hinterschneidung in dem gewünschten Durchmesser vollständig ausgerieben wird, kann ein Kipphebel vorgesehen sein, der erst bei Fertigstellung der Hinterschneidung ausrastet und dadurch eine Rückstellung der Schiebemuffe in Ausgangsposition durch ein Federelement bewirkt. Der Bohrer wird dabei wieder koaxial zur Bohrmittelachse ausgerichtet und kann dann aus dem Bohrloch wieder herausgezogen werden.

Weiterhin kann eine Hubsperre vorgesehen sein, die sicherstellt, daß die Hubeinrichtung nur in einer Hubrichtung bewegt werden kann, bis ein Rückhub freigegeben wird. Dadurch kann sichergestellt werden, daß die Hubeinrichtung jeweils bis zu den vorgegebenen Endstellungen in beiden Richtungen bewegt wird, ohne daß vorher eine Rückhubbewegung versehentlich eingeleitet wird.

Der Bohrer kann eine Hartmetallbohrplatte besitzen, die in einem Klemmhalter auswechselbar eingespannt ist. Dadurch ist es möglich, bei Materialverschleiß die Hartmetallbohrplatte gegen eine neue Hartmetallbohrplatte auszuwechseln. Es können auch für unterschiedliche Anwendungen Hartmetallbohrplatten mit unterschiedlich ausgebildeten Schneiden verwendet werden.

Die Erfindung wird nachfolgend anhand von in der Zeichnung dargestellten Ausführungsbeispielen näher erläutert.

Es zeigen:
- Figur 1: eine Bohrvorrichtung mit in der Bohrspindel verschwenkbar gelagertem Bohrerhalter,
- Figur 2: eine perspektivische Ansicht der Bohrvorrichtung von Figur 1 teilweise im Schnitt,
- Figur 3: die Bohrvorrichtung von Figur1, bei abgesenkter Bohrspindel,
- Figur 4: eine Rückhubsperre für die Hubeinrichtung der Bohrvorrichtung,
- Figur 5: eine Bohrvorrichtung mit in der Bohrspindel seitlich verschiebbarem Bohrerhalter,
- Figur 6: die Bohrvorrichtung gemäß Figur 1, jedoch mit einer zwischen Bohrspindel und Hubeinrichtung wirksamen Verriegelung,
- Figur 7 und Figur 8: einen in der Bohrvorrichtung verwendeten Bohrer mit einsetzbarer Hartmetallbohrplatte in Seitenansicht und im Längsschnitt.

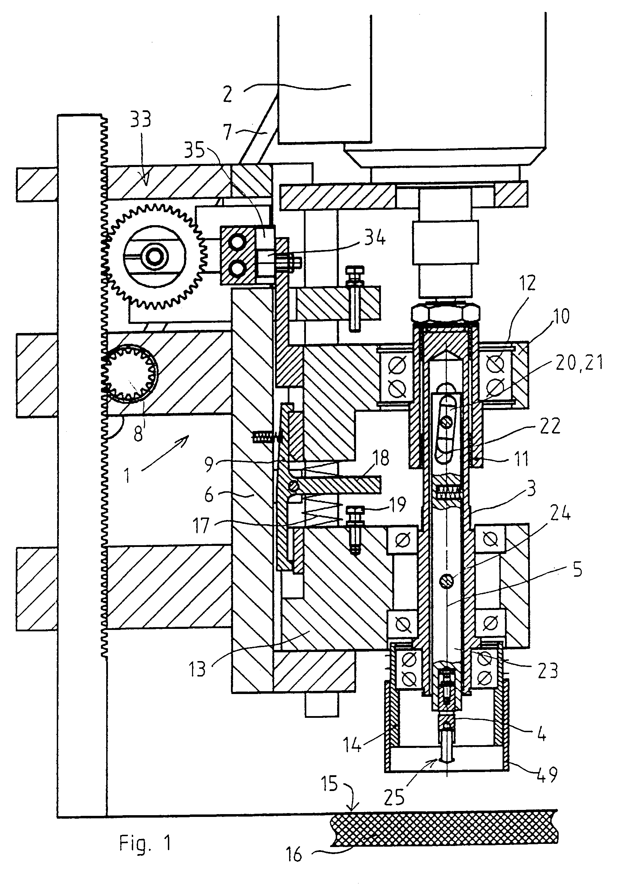

Die in Figur 1 dargestellte Bohrvorrichtung besteht im wesentlichen aus einer Hubeinrichtung 1, einer Antriebseinrichtung 2 sowie einer als Hohlspindel ausgebildeten Bohrspindel 3 mit Mitteln zur Auslenkung des Bohrers 4 aus der Bohrmittelachse 5.

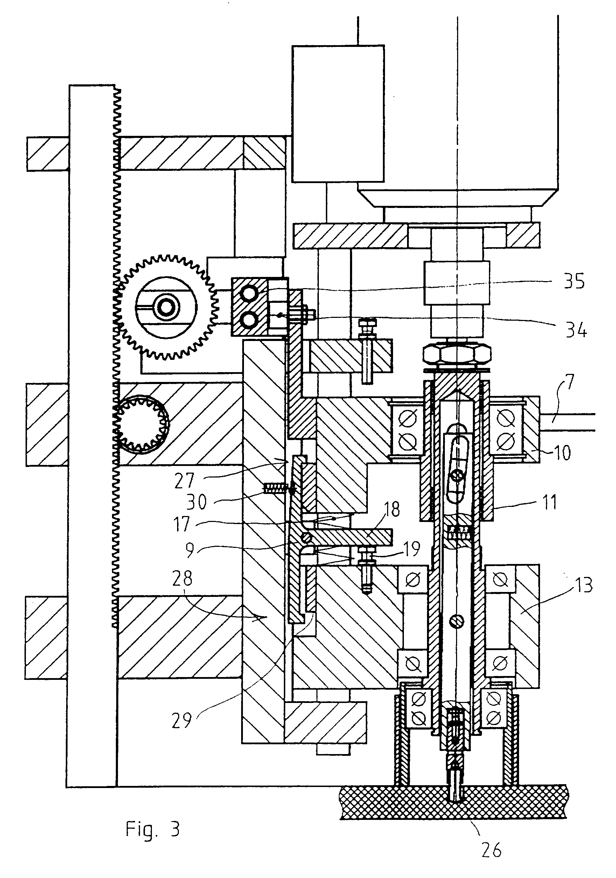

Die Hubeinrichtung 1 besitzt eine Grundplatte 6, die über einen Handhebel 7 und ein mit diesem verbundenes Zahnrad 8 vertikal absenkbar oder anhebbar ist. Wird die Grundplatte 6 durch Niederdrücken des Handhebels 7 abgesenkt, so nimmt ein an ihr befestigter Kipphebel 9 eine Halterung 10 mit, an der eine die Bohrspindel 3 umfassende Schiebemuffe 11 in einem Lager 12 gelagert ist. Bei einer solchen Abwärtsbewegung der Grundplatte 6 bewegt sich ein die Bohrspindel 3 aufnehmender Halteblock 13 solange mit nach unten, bis ein mit der Bohrspindel 3 verbundener Tiefenanschlag 14 an der Oberfläche 15 der hier dargestellten Fassadenplatte 16 zur Anlage kommt. Dieser Fall ist in Figur 3 dargestellt.

Wird die Grundplatte 6 nun weiter gegen die Federkraft eines Federelements 17 abgesenkt, welches zwischen dem Halteblock 13 und der Halterung 10 wirksam ist, so kommt ein Betätigungsarm 18 des Kipphebels 9 an einem höhenverstellbaren Anschlag 19 zur Anlage, der den Kipphebel 9 aus der Rastposition drücken kann. Diese Position ist in Figur 3 dargestellt. Die dabei stattgefundene Relativbewegung zwischen Kipphebel 9 und Schiebemuffe 11 einerseits, gegenüber dem Halteblock 13 mit Bohrspindel 3 andererseits bewirkt, daß die Schiebemuffe 11 gegenüber der Bohrspindel 3 nach unten geschoben wird. Dadurch wird der Bohrer 4 gegenüber der Bohrmittelachse 5 verschwenkt.

Zum Verschwenken des Bohrers 4 ist die Schiebemuffe 11 mit einem als Kulissenstein 20 ausgebildeten Auslenkelement 21 verbunden, der in einem Langloch 22 eines verschwenkbaren Bohrerhalters 23 eingreift. Der Bohrerhalter 23 ist um eine quer in der Bohrspindel 3 angeordnete Schwenkachse 24 schwenkbar. In Figur 3 ist der Bohrerhalter 23 und damit auch der stirnseitig befestigte Bohrer 4 gegenüber der Bohrmittelachse 5 geringfügig verschwenkt. In dieser Position taumelt der rotierende Bohrer 4 um die Bohrmittelachse 5, so daß dessen seitlich überstehende Schneiden 25 eine Hinterschneidung 26 (Figur 3) ausreiben können.

Wird die Schiebemuffe 11 über ihre Halterung 10 und die Grundplatte 6 weiter nach unten abgesenkt als es in Figur 3 dargestellt ist, so bewirkt der Anschlag 19 in Verbindung mit dem Betätigungsarm 18, daß der Kipphebel 9 an seinem oberen Ende 27 ausrastet, wodurch die Halterung 10 und damit auch die Schiebemuffe 11 von dem Federelement 17 nach oben in die neutrale Endposition geschoben werden. Dadurch wird der Bohrerhalter 23 wieder in die vertikale Position zurückverschwenkt, die in Figur 1 dargestellt ist. Ein Anheben des Betätigungshebel 7 bringt dann die gesamte Antriebseinheit und Bohrspindel ebenfalls zurück in die in Figur 1 dargestellte Ausgangsposition. Während dieses Anhebevorganges ist der Kipphebel an seinem unteren Ende 28 an einem Rastrand 29 eingerastet. In der oberen Endposition bringt die Druckfeder 30 den Kipphebel 9 wieder in die in Figur 1 dargestellte Raststellung.

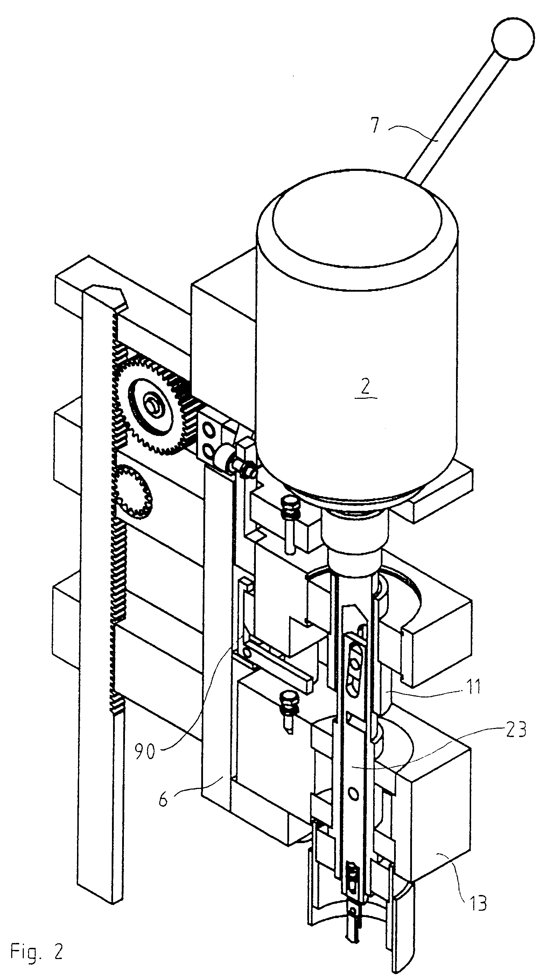

Figur 2 zeigt die Bohrvorrichtung in der in Figur 1 dargestellten Position, wobei ein geringfügig abgeänderter Kipphebel 90 verwendet wird.

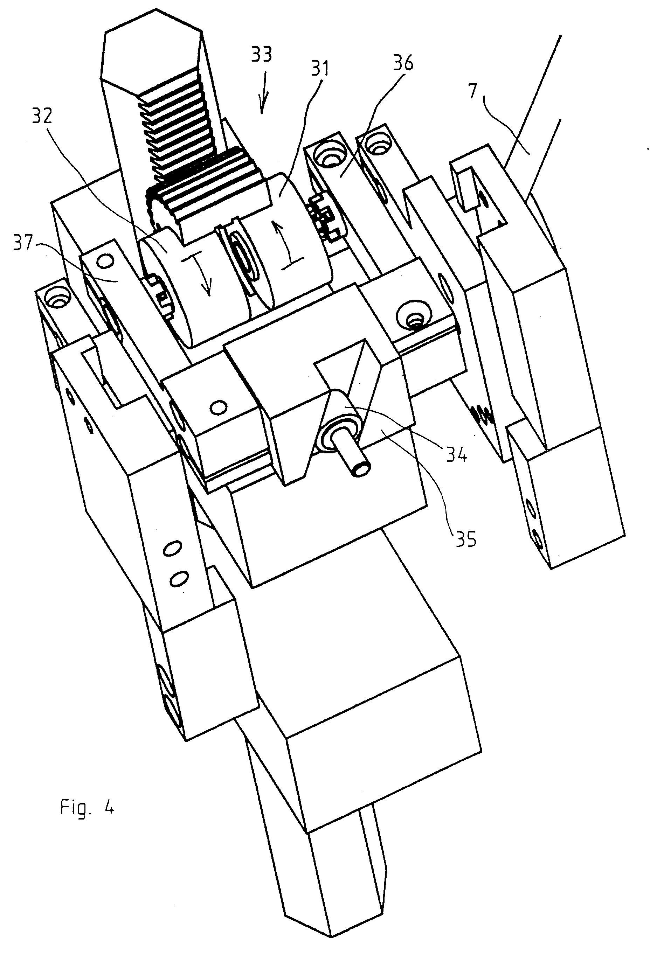

In Figur 4 ist insbesondere eine mit zwei Freiläufen 31, 32 bestückte Hubsperre 33 vorgesehen, die über eine Kurvenrolle 34 und einen Steuerblock 35 betätigt wird. Die Kurvenrolle 34 drückt den Steuerblock 35 je nach Stellung der Schiebemuffe 11 nach links oder rechts. Ist die Kurvenrolle 34 unten, wo das als Druckfeder arbeitende Federelement 17 gespannt ist, befindet sich der Steuerblock 35 rechts. Diese Position ist in Figur 4 dargestellt, in der ein rechts dargestellter Rasthebel 36 mit dem Freilauf 31 nicht in Eingriff ist. Der linke Rasthebel 37 ist dagegen im Eingriff mit dem zugeordneten Freilauf 32, der nur einen Abwärtshub an der Hubeinrichtung 1 (Figur 1) zuläßt. Sobald die Schiebemuffe 11 nach Fertigstellung der Hinterschneidung sich wieder nach oben bewegt wird über die Kurvenrolle 34 der Steuerblock 35 in die hier nicht dargestellte linke Position gebracht, so daß nun der Freilauf 31 mit dem rechten Rasthebel 36 in Eingriff ist. Die Hubeinrichtung kann nun nach oben in die Ausgangsposition zurückfahren. Durch erneutes Spannen des Federelements 17 wird in der oberen Position dann wiederum die Freilaufsperrung umgekehrt.

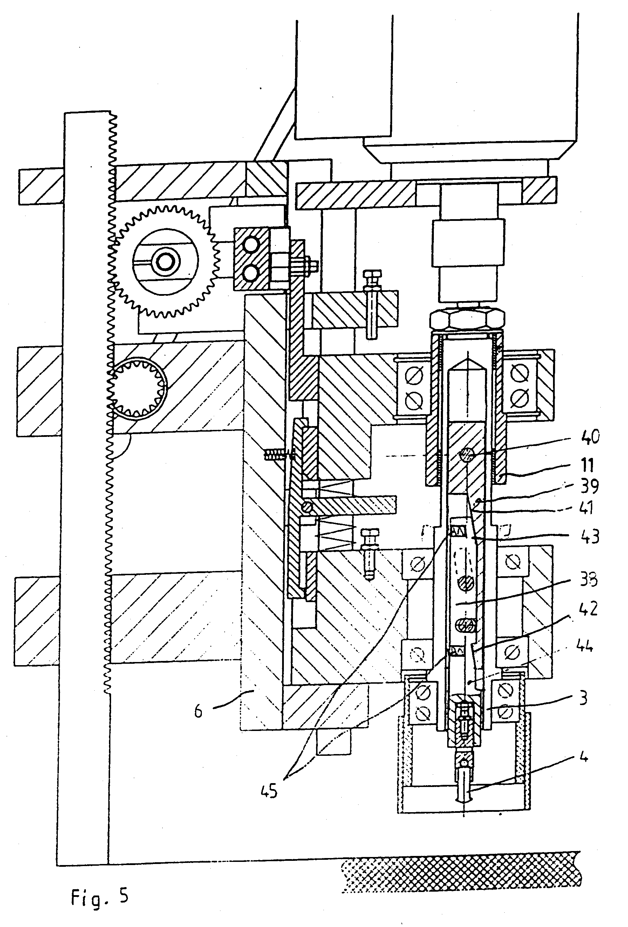

Figur 5 zeigt eine Ausführung mit einem bezüglich der Bohrmittelachse 5 parallel verschiebbaren Bohrerhalter 38, der von einem axial verschiebbar in der Bohrspindel 3 gelagerten Schieber 39 betätigt wird. Der Schieber 39 ist hier das Auslenkelement 21, welches über einen Bolzen 40 mit der Schiebemuffe 11 verbunden ist. Der Schieber 39 besitzt geneigte Steuerkanten 41, 42, die an gleichermaßen geneigten Kanten 43, 44 des Bohrerhalters 38 anlegen. Wird der Schieber 39 durch eine entsprechende Bewegung der Schiebemuffe 11 nach unten geschoben, so drücken dessen Steuerkanten 41, 42 den Bohrerhalter 38 nach links aus der dargestellten Mittenposition. Der Bohrer 4 führt dann bei rotierender Bohrspindel 3 eine Kreisbewegung aus, mit der die gewünschte Hinterschneidung im Bohrloch ausgerieben werden kann. Wird die Schiebemuffe 11 wieder in die in Figur 5 dargestellte Position zurückgeschoben, so drücken Druckfedern 45 den Bohrerhalter 38 in die mittige Ausgangsposition zurück.

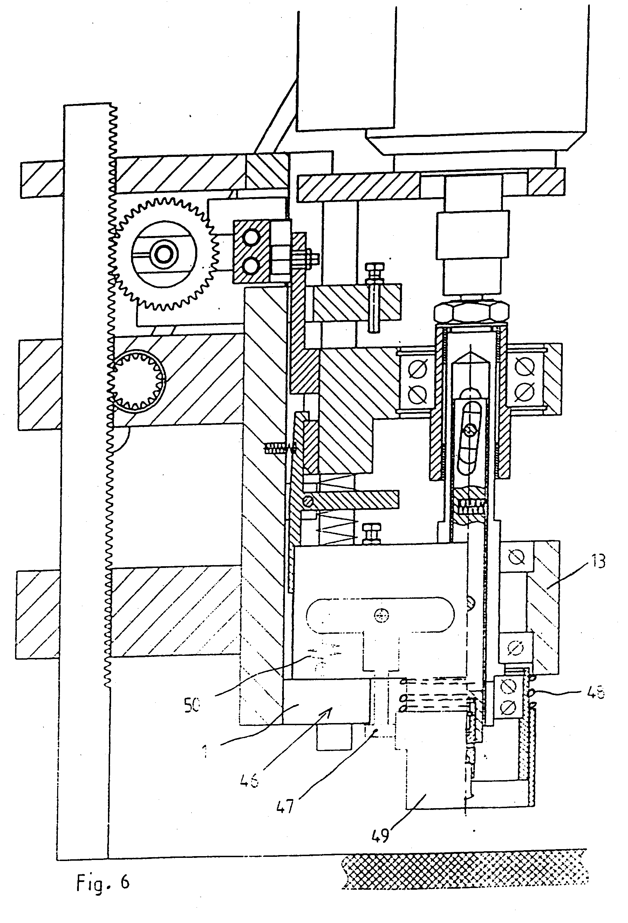

Figur 6 zeigt eine Ausführung mit einer Verriegelung 46, die zwischen Halteblock 13 und Hubeinrichtung 1 wirksam ist. Die Verriegelung 46 besitzt einen Rasthebel 47, der sicherstellt, daß der Halteblock 13 mit der Hubeinrichtung 1 bzw. mit der Grundplatte 6 solange starr verbunden ist, bis eine vorgegebene Bohrlochtiefe erreicht ist. Eine gegen die Kraft einer Druckfeder 48 zurückschiebbare Saugglocke 49 ermöglicht erst dann ein Lösen der Rastverbindung 46, wenn die Saugglocke 49 so weit nach oben zurückgeschoben ist, daß der Rasthebel 47 mittels Zugfeder 50 nach rechts schwenken kann.

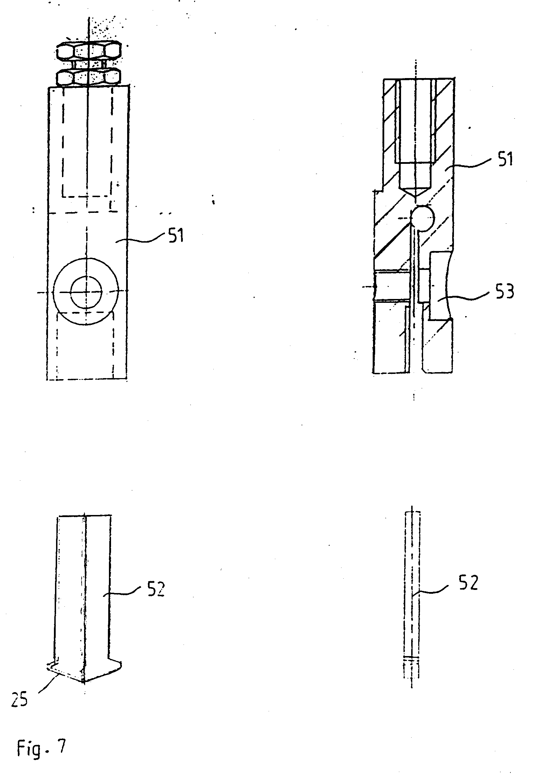

In Figur 7 ist die Seitenansicht eines Klemmhalters 51 dargestellt, in den eine Hartmetallbohrplatte 52 einspannbar ist. Ein derart ausgebildeter Bohrer kann in den zuvor beschriebenen Bohrvorrichtungen Verwendung finden. Der in Figur 8 dargestellte Längsschnitt zeigt weitere Details des Klemmhalters 51 mit Klemmschraube 53 für die Hartmetallbohrplatte 52. In Figur 7 sind auch die seitlich überstehenden Schneiden 25 deutlich ersichtlich.

## Patentansprüche

1. Bohrvorrichtung zur Herstellung von Bohrlöchern mit Hinterschneidung, insbesondere in Fassadenplatten aus Stein, Keramik, Beton oder dgl., mit einer Antriebseinrichtung (2) zum rotierenden Antrieb einer als Hohlspindel ausgebildeten Bohrspindel (3), in der ein Bohrerhalter (23, 38) einliegt, der seitlich auslenkbar in der Bohrspindel (3) aufgenommen ist und in den ein Bohrer (4) eingesetzt ist, mit einer Hubeinrichtung (1, 6-10, 13), mit der die Bohrspindel (3) zur Erzeugung einer Vorschubbewegung in axialer Richtung auf die Fassadenplatte (16) zu verschiebbar mit einem Tiefenanschlag (14), der die Bohrspindel (3) bei Erreichen einer vorgegebenen Bohrlochtiefe zurückhält, und mit einer die Bohrspindel (3) umfassenden Schiebemuffe (11), die axial gegenüber der Bohrspindel (3) verschiebbar und mit der ein Auslenkelement (21; 39) verbunden ist, das an einer Steuerfläche (22; 41, 42) oder dgl. des Bohrerhalters (23, 38) angreift und diesen bei einer Axialverschiebung der Schiebemuffe (11) mit dem Auslenkelement (21; 39) gegenüber der Bohrspindel (3) seitlich auslenkt, **dadurch gekennzeichnet**, daß der Bohrer (4) seitlich überstehende Schneiden (25) am Bohrkopf aufweist, daß die Schiebemuffe (11) über eine Verriegelungseinrichtung (9, 18) mit der Hubeinrichtung (1, 6-10, 13) verriegelt ist, und daß der Tiefenanschlag (14, 19) die Verriegelungseinrichtung (9, 18) bei Erreichen einer vorgegebenen Auslenkung löst.

2. Bohrvorrichtung nach Anspruch 1, **dadurch gekennzeichnet**, daß der Bohrerhalter (23, 38) um eine quer in der Bohrspindel (3) angeordnete Schwenkachse (24) schwenkbar ist.

3. Bohrvorrichtung nach einem der Ansprüche 1 oder 2, **dadurch gekennzeichnet**, daß als Steuerkurve ein Langloch (22) in dem Bohrerhalter (23 38) ausgebildet dessen Längsrichtung in spitzem Winkel zur Bohrmittelachse (5) verläuft und in das ein Kulissenstein (20) als Auslenkelement (21) eingreift.

4. Bohrvorrichtung nach Anspruch 1, **dadurch gekennzeichnet**, daß der Bohrerhalter (23, 38) radial zur Achse der Bohrspindel (3) parallel verschiebbar in der Bohrspindel (3) gelagert ist und ein axial in der Bohrspindel (3) verschiebbarer Schieber (39) mit geneigten Steuerkanten (41, 42) als Auslenkelement (21) an dem Bohrerhalter (23, 38) angreift.

5. Bohrvorrichtung nach einem der vorhergehenden Ansprüche, **dadurch gekennzeichnet**, daß die Schiebemuffe (11) sich über ein Federelement (17) an der Bohrspindel (3) über ein mit der Bohrspindel (3) verbundenes Element (13) axial abstützt, daß die Schiebemuffe (11) über einen Betätigungshebel (7) axial verschiebbar ist und daß an der Bohrspindel (3) ein die Bohrlochtiefe begrenzender Tiefenanschlag (14) absteht.

6. Bohrvorrichtung nach einem der vorhergehenden Ansprüche, **dadurch gekennzeichnet**, daß die Verriegelungseinrichtung einen Kipphebel (9, 18) aufweist, der an einer Grundplatte (6) der Hubeinrichtung (1) angebracht ist und der an einer die Schiebemuffe (11) haltenden Halterung (10) angreift und diese zur Herstellung einer Hinterschneidung gegen eine Federkraft mitbewegt und bei Fertigstellung der Hinterschneidung ausrastet und die Halterung (10) der Schiebemuffe (11) freigibt.

7. Bohrvorrichtung nach einem der vorhergehenden Ansprüche, **dadurch gekennzeichnet**, daß eine Hubsperre (33) vorgesehen die zur Ausführung der Bohrung und Hinterschneidung einen Rückhub erst zuläßt, wenn die erforderliche Bohrlochtiefe erreicht und die Hinterschneidung vollständig ausgeführt ist.

## Claims

1. Drilling device for producing drilled holes with an undercut, in particular in facing panels of stone, ceramics, concrete or similar material, having a drive device (2) for the rotating drive of a drilling shaft (3) in the form of a hollow shaft in which a drill bit holder (23, 38) lies, the drill bit holder being received in the drilling shaft (3) so as to be laterally displaceable and in which a drill bit (4) is inserted, having a raising device (1, 6-10, 13), with which the drilling shaft (3), to produce an advancing movement, is displaceable in an axial direction towards the facing panel (16), having a depth stop (14) which holds the drilling shaft (3) back when a preset drilled hole depth has been reached, and having a sliding sleeve (11) surrounding the drilling shaft (3), which sliding sleeve is axially displaceable with respect to the drilling shaft (3) and to which is connected a displacement element (21; 39) which acts on a control face (22; 41, 42) or similar means of the drill bit holder (23; 38) and displaces the latter laterally with respect to the drilling shaft (3) on axial displacement of the sliding sleeve (11) with the displacement element (21; 39), characterized in that the drill bit (4) has laterally projecting cutting edges (25) at the drilling head, the sliding sleeve (11) is locked by means of a locking device (9, 18) with the raising device (1, 6-10, 13) and the depth stop (14, 19) releases the locking device (9, 18) when a preset displacement is achieved.

2. A drilling device according to claim 1, characterized in that the drill bit holder (23, 38) is arranged to swivel about a swivel axis (24) arranged transversely in the drilling shaft (3).

3. A drilling device according to one of claims 1 and 2, characterized in that a slot (22) in the drill bit holder (23, 38) is provided as control cam, the longitudinal direction of which slot runs at an acute angle to the centre line of drilling (5), and in which a sliding block (20) engages as displacement element (21).

4. A drilling device according to claim 1, characterized in that the drill bit holder (23, 38) is mounted in the drilling shaft (3) so as to be displaceable radially and parallel with respect to the axis of the drilling shaft (3), and a slider (39) with inclined control edges (41, 42), which is axially displaceable in the drilling shaft (3), acts as the displacement element (21) on the drill bit holder (23, 38).

5. A drilling device according to one of the preceding claims, characterized in that the sliding sleeve (11) bears axially on the drilling shaft (3) by way of a spring element (17) and by way of an element (13) joined to the drilling shaft (3), that the sliding sleeve (11) is axially displaceable by means of an operating lever (7), and that a depth stop (14) limiting the depth of the drilled hole projects from the drilling shaft (3).

6. A drilling device according to one of the preceding claims, characterized in that the locking device comprises a tilting lever (9, 18) which is mounted on a base plate (6) of the raising device (1) and which engages a holder (1) holding the sliding sleeve (11) and moves this with it against a spring force to produce an undercut, and on completion of the undercut disengages and releases the holder (10) of the sliding sleeve (11).

7. A drilling device according to one of the preceding claims, characterized in that a lock (33) against raising is provided, which, for performing the drilling and the undercutting, does not allow a return movement until the required drilled hole depth has been reached and the undercut has been fully formed.

## Revendications

1. Dispositif de perçage destiné à la réalisation de trous percés dotés d'une contre-dépouille, en particulier pour des plaques de façade en pierre, en céramique, en béton ou en des matériaux similaires, comportant un dispositif d'entraînement (2) destiné à entraîner en rotation une broche de perçage (3) conformée en arbre creux, dans laquelle est logé un porte-foret (23, 38) qui est reçu dans la broche de perçage de manière à pouvoir être mis en pivotement latéralement et dans lequel est mis en place un foret (4), un dispositif d'abaissement-soulèvement (1, 6 à 10, 13) au moyen duquel la broche de perçage (3) peut être déplacée en vue de produire un mouvement d'avance dans la direction axiale jusqu'à la plaque de façade (16), lequel dispositif d'abaissement-soulèvement comporte une butée de profondeur (14) qui retient la broche de perçage (3) lorsqu'est atteinte une profondeur de trou percé fixée à l'avance, et un manchon coulissant (11) entourant la broche de perçage (3), qui peut être déplacé axialement par rapport à la broche de perçage (3) et auquel est relié un élément de pivotement (21, 39) qui attaque une surface de commande (22; 41, 42) ou similaire du porte-foret (23, 38) et qui fait pivoter latéralement celui-ci par rapport à la broche de perçage (3), au moyen de l'élément de pivotement (21; 39) lorsque le manchon coulissant (11) est déplacé axialement, caractérisé en ce que le foret (4) présente sur la tête de perçage des tranchants (25) faisant saillie latéralement, en ce que le manchon coulissant (11) est verrouillé avec le dispositif d'abaissement-soulèvement (1, 6 à 10, 13) par l'intermédiaire d'un dispositif de verrouillage (9, 18), et en ce que la butée de profondeur (14, 19) libère le dispositif de verrouillage (9, 18) lorsqu'est atteint un pivotement fixé à l'avance.

2. Dispositif de perçage selon la revendication 1, caractérisé en ce que le porte-foret (23, 38) peut être mis en pivotement sur un axe de pivotement (24) disposé transversalement dans la broche de perçage (3).

3. Dispositif de perçage selon l'une des revendications 1 ou 2, caractérisé en ce qu'un trou oblong (22) est réalisé dans le porte-foret (23, 38) en tant que came de commande, sa direction longitudinale formant un angle aigu par rapport à l'axe médian de perçage (5) et dans lequel trou oblong pénètre un coulisseau (20) servant d'élément de pivotement (21).

4. Dispositif de perçage selon la revendication 1, caractérisé en ce que le porte-foret (23, 38) est monté dans la broche de perçage (3) de manière à pouvoir être déplacé radialement, parallèlement à l'axe de la broche de perçage (3), et en ce qu'un coulisseau (39) susceptible d'être déplacé axialement dans la broche de perçage (3) comportant des bords de commande inclinés (41, 42) attaque le porte-foret (23, 38) en tant qu'élément de pivotement (21).

5. Dispositif de perçage selon l'une des revendications précédentes, caractérisé en ce que le manchon coulissant (11) s'appuie axialement, par l'intermédiaire d'un élément élastique (17) sur la broche de perçage (3), grâce à un élément (13) relié à la broche de perçage (3), en ce que le manchon coulissant (11) peut être déplacé axialement par l'intermédiaire d'un levier d'actionnement (7) et en ce que sur la broche de perçage (3) fait saillie une butée de profondeur (14) limitant la profondeur du trou percé.

6. Dispositif de perçage selon l'une des revendications précédentes, caractérisé en ce que le dispositif de verrouillage présente un levier basculant (9, 18) qui est monté sur une plaque de base (6) du dispositif d'abaissement-soulèvement (1), qui attaque un support (10) maintenant le manchon coulissant (11), qui entraîne celui-ci en vue de réaliser une contre-dépouille à l'encontre d'une force élastique, qui se désencliquette lorsque la contre-dépouille est terminée et qui libère le support (10) du manchon coulissant (11).

7. Dispositif de perçage selon l'une des revendications précédentes, caractérisé en ce qu'est prévu un dispositif de verrouillage (33) de déplacement vertical qui, en vue de l'exécution du trou percé et de la contre-dépouille, n'autorise un déplacement vertical inverse que lorsque la profondeur de perçage nécessaire, ainsi que la contre-dépouille, ont été réalisées de façon complète.
